# EUROPEAN PATENT APPLICATION

(11) **EP 1 946 639 A2**
(43) Date of publication of application: **23.07.2008**
(21) Application number: 07117569.9
(22) Date of filing: 28.09.2007
(51) Int. Cl.: A21D 2/36, A21D 13/00, A21D 13/02, A23C 19/09, A23J 3/22, A23L 1/10, A23L 1/105, A23L 1/22, A23L 1/23, A23L 1/237, A23L 1/39

(54) **DDGS as a low-cost flavor enhancer and sodium reduction enabler**

(30) Priority: 29.12.2006 US 617984
(71) Applicant: KRAFT FOODS HOLDINGS, INC., Northfield, Illinois 60093 (US)
(72) Inventor: Silver, Richard Stuart, Wilmette, IL 60091 (US); Petrofsky, Keith Eric, Minneapolis, MN 55414 (US); Brown, Peter Harris, Glenview, IL 60025 (US); Leduc, Charles A., Chicago, IL 60618 (US); Pai, Ya-Yu, Lombard, IL 60143 (US)
(74) Representative: Smaggasgale, Gillian Helen

(57) **Abstract**

New uses of distiller's grain and solubles (DGS) are provided, including beneficial use of the natural flavor of DGS as a flavorant or sodium potentiator. A low-cost alternative to sodium and other flavorants is thereby provided.

## Description

### FIELD OF THE INVENTION

The present invention relates to new uses for byproducts from the fermentation of grain, referred to as "distiller's grains and solubles" or "DGS," especially dried forms known as "distiller's dried grains and solubles" or simply "DDGS." The invention further relates to uses of DDGS as a flavorant and flavor enhancer in food for human consumption, and uses of DDGS as a low-cost alternative to other, more expensive flavor compounds.

### BACKGROUND OF THE INVENTION

DGS is the residue remaining after grain is saccharified and fermented to form ethyl alcohol. After the alcohol is removed by distillation, there remains a residue made up of carbohydrate-depleted components of the grain, deactivated saccharifying enzymes, and hydrolyzed yeast from the fermentation process. DGS contains essentially all of the protein, fiber, minerals, oil, and vitamins of the grain from which it is produced, without the starch components thereof. DGS also contains the nutritionally beneficial components derived from yeast during fermentation. DGS can be made from the fermentation of any grain, but corn has become an especially plentiful source of DGS due to the enormous growth of corn-based fuel production. The ability to efficiently produce large amounts of ethanol from corn has led to a recent expansion of the corn fermentation industry, and consequently an expansion in production of corn-based DGS.

in the typical corn-based ethanol process, the corn is dry milled, mixed with water and enzymes to saccharify the cornstarch, and then combined with yeast to ferment the sugars to form a mash containing ethanol. Ethanol is distilled from the mash, and the remaining grain residue and solubles (primarily yeast hydrolysate) may then be dried to form DGS. Various types of dryers, including drum dryers, spray dryers and ring dryers are commonly used to make dried DGS (DDGS). Undried or wet distillers grains and solubles (wet DGS) contains up to 80% moisture and is unstable, impractical to transport, and rapidly spoils. Therefore, most DGS is dried to DDGS, although some wet DGS is used when storage and transportation are minimal. Although uses of DDGS are primarily described herein, it will be understood that wet DGS may be substituted for DDGS if transport and spoilage are not a concern.

Once seen as a mere byproduct of ethanol production, DDGS has the potential for use in other markets, thereby greatly reducing the waste associated with the fermentation process. However, DDGS is currently used for little more than animal feed. Although DDGS is rich in protein, fiber, and desirable minerals and vitamins, its use in human food has been hindered by its strong fermented and/or burnt flavor.

Nevertheless, attempts to use DDGS as an ingredient in food have been reported. Generally, these attempts involve using DDGS as a bulk replacement for grain-based ingredients such as flour or corn meal, replacing anywhere from 10-50% of the grain with DDGS or a compound incorporating DDGS. Since the flavors of commercial-grade DDGS are generally considered organoleptically unacceptable and too potent for use in most food products, these attempts often involve methods of improving or masking the flavor and/ar color of DDGS by altering the fermentation process or adding additional ingredients.

Processes for making light-colored DDGS have also been disclosed. However, even this light-colored DDGS has a strong flavor, and therefore has not generally been considered appropriate for incorporation into food suitable for humans without altering or masking of its flavor. Furthermore, the methods of producing lighter-colored DDGS described in most prior art references require alteration to the normal processing steps of distillation.

U.S. Patent No. 5,061,497 to Thacker Involves saccharifying grain and separating the solubles from the spent grain prior to fermentation so as to allegedly produce a DDGS with improved flavor suitable for human food use. U.S. Patent No. 5,225,228 to Reddy involves the addition of sodium carbonate, amino acids, and potato starch to DDGS to improve its flavor. This modified DDGS is then used to replace up to 50 percent of flour in bread and other baked goods. U.S. Patent No. 4,828,846 to Rasco claims to produce DDGS with improved flavor by controlling pH and other conditions during the fermentation and by using specific acidulants and alkaline compounds for this purpose. Rasco reported that controlling fermentation pH at 4-5 with organic acids and selected alkaline compounds Improves DDGS quality.

The prior art, however, does not disclose using the flavor of DDGS to improve the flavor of food compositions. Due to the high protein, vitamin, and mineral content of DDGS, most investigators have focused on incorporating fairly large amounts of DDGS into food products as filler, and to that end have sought to reduce the DDGS's Intense fermented flavor. Therefore, the prior art patents discussed above are directed to "improving" or hiding the flavor of DDGS so that its addition to a food product is organoleptically "acceptable."

As described herein, it has surprisingly been found that DGGS itself has beneficial flavor properties, which can actually improve flavor and replace other flavor ingredients, such as sodium, when used in appropriate amounts.

It would therefore be beneficial to create a new use for DDGS, which would serve to offset some of the cost of the ethanol production process. It further would be beneficial to provide a new, low-cost sodium substitute or sodium potentiating agent.

### SUMMARY OF THE INVENTION

The present invention advantageously utilizes DGS or DDGS, especially "High Quality DDGS, to improve the flavor of target foods. For purposes of the present disclosure, "High Quality" DDGS refers to light-colored DDGS with an "L" value of at least about 60 and a "b" value of at least about +40 as measured on the Hunter Instruments L*a*b color scale, as described further herein. DDGS from the distillation of any grain, including but not limited to com, wheat, sorghum, rice, and barley may be used. Although the invention will be described primarily through reference to corn-based DDGS, the disclosure is not meant to be limiting, and it will be understood by those of skill in the art that wet or dry DGS (or DGS extracts) may be used, and that other grains readily may be substituted for com.

The present invention makes use of DDGS at levels effective for use as a flavorant or flavor enhancer in a variety of food products. In accordance with the present invention, DDGS may be used as a flavorant or as a sodium potentiating agent (a compound that enhances the flavor of salt in a food product). Due to these properties, DDGS may be used as a salt substitute in a wide variety of foods.

In a further aspect of the present invention, the DDGS used as a flavorant or flavor enhancer is a High Quality DDGS. High Quality DDGS is lighter in color than the average DDGS, and is substantially free of both burnt flavor and visible dark particles. It has been discovered that such lighter colored, or High Quality, DDGS particles have more savory and umami flavors, whereas darker colored particles have less of these desirable flavor characteristics. Darker particles tend to have more bitter, astringent, burned flavors and may be visually objectionable in light-colored foods.

According to the present invention, DDGS may be incorporated into food compositions as a flavor-enhancing ingredient in amounts less than about 10% (by weight on an as is basis) of the food formulation, preferably in the range of about 1-5% of the total food formulation. Use of DDGS, even High Quality DDGS, at higher concentrations can impart the undesirable flavors noted in the prior art. The DDGS may be incorporated into foods as a flavorant, as a replacement for sodium in low-sodium foods, and/or as a sodium potentiator to enhance the flavor of sodium in foodstuffs.

Wet or undried DGS, having not been exposed to abusive drying conditions, has many of the desirable characteristics of High Quality DDGS and could therefore be used in food applications in place of High Quality DDGS. However, since undried DGS is microbiologically unstable and cannot be stored for long periods of time, it must be used within close proximity to the point of production and within a short time period. Also, due to the high moisture content of undried DGS (up to about 80% by weight), it's use would be impractical in some food products and impossible in others (e.g., dry-blended cheese sauce mixes).

Extracts prepared from dried or undried DGS may also be used. Aqueous extracts of DGS comprise all of the water-soluble flavorants of DGS, as well as vitamins, peptides, and minerals, but none of the water-insoluble fiber, proteins, or oil. Therefore, extracts provide more concentrated flavors without adding significant bulk to food products.

### DETAILED DESCRIPTION OF PREFERRED EMBODIMENTS

DDGS generally has a strong, generally overpowering flavor. It has been advantageously and surprisingly discovered that DDGS, especially High Quality DDGS, can exhibit a pleasant savory (salty) flavor or "umami" (meaty) flavor when used sparingly as a flavorant. These pleasant and desirable flavors may be achieved by using relatively minor amounts of High Quality DDGS (less than about 10 wt.%, preferably less than about 5 wt.%, of the food in which it is incorporated as a flavorant). The capacity of DDGS as a flavorant has not been previously recognized. Previous efforts to incorporate DDGS into food compositions therefore have focused on incorporating DDGS into food products by replacing primary components, such as flour. The flavor of DDGS has heretofore been viewed as an unfortunate side effect that requires either modification of the fermentation process or masking (if and when possible) of the flavors. The fact that, under certain conditions, it can act as a beneficial flavorant is indeed surprising.

Thus, in one aspect the present invention provides methods of improving the flavor of food products through the addition of relatively minor amounts of DDGS. Rather than using DDGS as a major ingredient in foods as is typical of the prior art, the present invention uses DDGS as a flavorant in amounts less than about 10 wt. % of the entire food, preferably less than about 5 wt. % of the total food. The savory flavor of minor amounts of DDGS is particularly desirable in certain baked products (such as breads, pizza crusts, crackers (fermented, nonfermented, flavored, or unflavored), baked goods containing cheese, cereal, stuffing mixes, and the like), analog meats (soy and vegetable meat substitutes), cheese sauces, process cheeses, salad dressings, seasoning mixes, and the like. The formulas for such food compositions may be modified to substitute DDGS for a portion of the sodium otherwise called for by the formula, thereby creating a reduced-sodium version of the food composition.

The use of DDGS as a fermentation flavor enhancer is especially beneficial for baked goods traditionally relying on yeast fermentation or fermentation products for flavor development. Using DDGS not only increases fermentation flavors in the product, it may also allow reduction or elimination of the fermentation process in the production of such food products, thereby shortening or simplifying processing of baked goods including breads, flat breads, pizza crusts, crackers, stuffing mixes, and the like. Use of DDGS in these products may also reduce the need for other more expensive ingredients to provide fermentation flavors including live yeast, inactive yeast, acidulants, and natural and artificial flavors.

The use of DDGS as a flavorant is especially beneficial in low-fat and low-sodium food compositions. Most low-fat and low-sodium foods have a noticeable deficiency in flavor. Advantageously, the present invention provides a low-cost method to help overcome such flavor deficiencies by adding inexpensive DDGS to food products rather than sodium or higher-cost sodium replacers such as yeast hydrolysates, enzyme modified cheeses, cultured cheese concentrates, nucleotides and amino acids, compounded flavors, and the like. This leads not only to a reduction of sodium, providing health benefits normally associated with a low-sodium diet, but also to an increase in the overall protein, vitamins, and minerals of the food product.

Surprisingly, in addition to its properties as a flavorant, DDGS also is capable of acting as a sodium potentiator. In other words, it is capable of increasing the perception of "salty" taste in food compositions to which it is added. Thus DDGS also has the capacity to act as a flavor enhancer that permits the reduction of overall sodium in food products. With the food industry currently developing a variety of lower-sodium foods for health related reasons, there is an enormous potential market for uses of DDGS as a flavor enhancer. In a food product having a formula that ordinarily requires a given proportion of sodium relative to other ingredients, the amount of DDGS which may be substituted for sodium varies greatly depending on the type of food and starting level of sodium. Generally, however, up to 5-50% of the sodium that is ordinarily required by the product formula can be replaced using DDGS.

Prior attempts to incorporate DDGS into food products for human consumption did not recognize the beneficial sodium-potentiating effect of DDGS. Rather than using DDGS as a replacement for sodium, the prior art adds DDGS to a food composition containing a normal amount of sodium, thereby creating an overpowering flavor.

It is known that certain other compounds have a sodium potentiating effect (e.g. monosodium glutamate, soy protein hydrolysate, 5-prime nucleotide salts (for example, GMP; IMP); the sodium salts of 5'-inosinic acid or 5'-guanosinic acid, and yeast extract). However, all of these sodium potentiating agents are far more expensive than DDGS. DDGS also has the benefit of being a natural product that is label friendly and under current regulations may be listed on a food ingredient label as "cultured grain," providing a more appealing name compared to the previously mentioned sodium potentiators. In addition, other sodium potentiating agents typically do not bring into a food product other beneficial ingredients contained in DDGS such as fiber, protein, and vitamins.

The use of DDGS as a flavorant and flavor enhancer creates a multitude of new uses for the compound, and offers a cost-effective mechanism for enhancing savory and umami flavors in food. Furthermore, the use of DDGS in the present invention involves conventionally processed DDGS with no separation of the components of the grain prior to fermentation, and does not require modification of the fermentation process. Therefore, the present invention avoids costs and other complications associated with alterations to the fermentation process. The invention, however is not limited to the use of DDGS in the current form, since one of skill in the art would understand that the invention may be used in conjunction with modifications to the DDGS either before or after processing to adjust the composition of fiber, lipid, protein, and or flavor, or to adjust particle size or create a fraction (such as an extract) to target a particular product profile and flavor. The invention encompasses but is not limited to all these possible modifications.

The present invention may further involve modifications of the drying process and/or methods of selecting High Quality DDGS particles (e.g. light-colored particles) through physical separation of DDGS after production. DDGS produced from corn has an appearance similar to corn meal, although heating during saccharification and/or drying can burn some or all of the particles and cause them to darken. In significant amounts, this darkened DDGS is unsuitable for use in some human food because its dark appearance makes its addition to food compositions extremely noticeable. In fact, some producers of animal feed have altered their processes to make lighter-colored DDGS for use in feed applications to improve acceptability in animal feed compositions.

Color of the DDGS may be analyzed by any method, including visually or spectrophotometrically. A spectrophotometer is a device that analyzes wavelengths of light visible to the human eye and expresses them numerically in terms of the amount of green, yellow, blue, and red contained in a sample relative to some standard, as well as the relative tint (darkness or lightness) of the sample. The information from a spectrophotometer may be expressed numerically in a number of ways, such as through the "L*a*b" color scale used by Hunter Instruments and other suppliers. Spectrophotometry readings are also referred to an an "XYZ" scale because they may be described in terms of three components, or axes, as in a 3-dimensional XYZ grid. The Hunter or XYZ or L*a*b method is a standard color analysis system as described in American Society of Testing &, Materials (ASTM) D6290, E1347, and E308.

The L*a*b scale describes the color of a sample in terms of three color variables. The L scale represents the tint of a sample on a scale of 0-100, with a value of 100 representing white and a value of zero representing black. The "a" scale is a measure of the relative amount of green or red light reflected by the sample, with positive "a" values representing increasing intensity of red and negative "a" values representing increasing intensity of green. The "b" scale is a measure of the relative amount of blue or yellow light reflected by the sample, with positive values representing increasing intensity of yellow and negative values indicating increasing intensity of blue. ASTM or the equipment manufacturer provides standard color samples which are used to calibrate the instrument. High Quality DDGS (dried DGS) made from corn for use in the present invention preferably has an "L" score of at least about 60 and preferably at least about 70, and a "b" score of at least about +40 and preferably above about +45. DDGS that is dark in color (*i.e.*, outside the specified range) has been thermally abused during heating and has less of the flavor characteristics preferred for use in the invention. However, enough flavor characteristics remain present in non-High Quality DDGS so that in many instances where DGS or an extract or fraction of DDGS is utilized solely to provide flavor or a sodium potentiating effect, the color preferences described are not limiting and any DGS or DDGS is considered as part of the invention.

High Quality DDGS may be used to increase the effectiveness of DDGS as a flavorant and/or flavor enhancer. High Quality DDGS may be obtained by regulating the production process to create lighter colored particles, or by selectively removing dark particles. Any method of physical separation of DDGS may be used. For instance, light particles of DDGS may be physically separated from less desirable particles based on color. Alternatively, light DDGS may be selectively removed from darker particles by air elutriation, since it has been advantageously discovered that there is a rough correlation between DDGS color and density, with darker colored particles having a greater average density than lighter particles. Therefore, air elutriation selecting for less dense particles may be used to create a lighter-colored, High Quality DDGS. High Quality DDGS may also be created by controlling processing steps, such as by using milder than normal drying conditions in order to avoid burning portions of the DDGS. As explained above, wet DGS may also be used, since foregoing the drying step will yield High Quality DGS for use in situations where spoilage and transport are not concerns (i.e. where the DGS will be used within a short amount of time at a location close to the site of production).

Although the invention is described herein with reference to particular embodiments, it will be understood by those of skill in the art that various alterations, modifications, and adaptions may be made based on the present disclosure without departing from the spirit of the present invention.

**Example 1.** Two loaves of low-sodium (1.3 % salt on a flour basis where wheat flour plus either corn meal or DDGS equal 100%) bread were baked, one loaf containing 6.75 wt. % DDGS (Adkins Energy, Lena Illinois) in place of flour. The control loaf contained 6.75 wt.% ground yellow corn meal substituted for flour rather than DDGS for a more direct comparison. The formulas for the two loaves are shown below:

### Control Loaf

| **Ingredients** | **Percentage** |
|---|---|
| Hard Red Winter Flour (14% moisture basis) | 93.25 |
| Ground Yellow Corn Meal | 6.75 |
| Instant Dry yeast | 0.85 |
| Salt | 1.30 |
| Sucrose | 6.00 |
| Super Hymo Shortening | 3.00 |
| makeup water for dry yeast | 1.65 |
| Cold Water | 56.00 |

### Loaf Containing DDGS

| **Ingredients** | **Percentage** |
|---|---|
| Hard Red Winter Flour (14% moisture basis) | 93.25 |
| DDGS (Adkins Energy) | 6.75 |
| Instant Dry yeast | 0.85 |
| Salt | 1.30 |
| Sucrose | 6.00 |
| Super Hymo Shortening | 3.00 |
| makeup water for dry yeast | 1.65 |
| Cold Water | 56.00 |

The loaves were prepared according to the American Association of Cereal Chemists straight dough baking methodology (AACC 10-10B). The loaves were sliced and tasted by a trained sensory panel. Although both loaves were of a low-sodium formulation, the bread containing DDGS was observed to have a superior, saltier flavor more like that of a full-sodium bread in 25 out of 33 observations of a trained sensory panel This result was determined to be statistically significant to the 95^{th} percentile.

**Example 2**. Two samples of DDGS, one light-colored High Quality DDGS sample and one dark-colored DDGS sample, were used to bake samples of bread for comparison.

The two types of DDGS were analyzed using spectrophotometry with a Hunter Ultrascan XE (Hunter Instruments). The lighter-colored sample had the following L*a*b values: L=70.18, a=+10.41, b=+46.08. The darker-colored sample, by contrast, had the following L*a*b values: L=4.4.18, a=+13.03, b=+31.30. The two types of DDGS were ground to particle sizes of less than 0.5 mm and used to bake separate loaves of bread following the formulation from example 1. The two loaves were then compared organoleptically.

The lighter-colored sample was judged to have significantly more desirable flavor characteristics, having a mild yeast-like, slightly fermented flavor. By contrast, the sample prepared with darker-colored DDGS was judged to have an less desirable flavor, with more prominent burnt, bitter, and sour notes.

**Example 3**. Self-rising pizza crusts were made using a dough containing 4% (flour basis) "Upper Class" DDGS (Chippewa Valley Energy Company). The formula used was similar to the self rising pizza crust formula found in U.S. Pat. No. 6,863,915. Salt was reduced from 2.5% to 1.5% (flour basis) in the dough containing DDGS, representing an overall sodium reduction of approximately 30% in the crust. The "upper class " DDGS is the overhead, low-density fraction of standard DDGS which has been air classified during a ring drying process. This material is lighter in color, devoid of burnt particles, and meets the L*a*b criteria for High Quality DDGS. Control pizza crusts were made with the same formula but with 4% corn meal (flour basis) in place of DDGS and full salt (2.5% flour basis) in the formula. The pizza crusts were topped with sauce and cheese and then baked. The pizzas made with crusts incorporating DDGS were found to have excellent rise, color, and flavor, and were judged by an expert panel to have superior flavor when compared to control crusts. The pizzas made with crusts incorporating DDGS were also judged to have salt flavor equivalent to normal crusts, despite having 40% less sodium.

**Example 4**. Cheese powder mixes for making microwavable cheddar cheese sauce were produced as described in the table below. The control powder contained 3.05% added salt while samples 1 and 2 contained 50% less added salt. Sample 2 also contained 2% CVEC "Upper Class" DDGS. The cheese sauce powder was mixed with water and dry pasta, and then microwaved until the pasta was soft. An expert panel judged sample 1, which had less salt and no DDGS, to have less salt flavor than the control, but judged sample 2, which replaced a portion of the salt with DDGS, to have salt flavor equivalent to the control sample.

| **Ingredient** | **Control Sample** | **Sample 1** | **Sample 2** |
|---|---|---|---|
| Cheese powder (a) | 34.79 | 34.97 | 34.62 |
| Hydrogenated soybean oil powder | 32.49 | 32.66 | 32.33 |
| Instant corn starch | 7.76 | 7.80 | 7.72 |
| soybean oil | 1.11 | 1.12 | 1.11 |
| whey powder | 18.56 | 18.65 | 18.46 |
| salt | 3.05 | 1.53 | 1.53 |
| tricalcium phosphate | 2.24 | 2.25 | 2.23 |
| DDGS ("Upper Class") | 0 | 0 | 2 |
| | | | |
| total | 100.0 | 100.0 | 100.0 |

**Example 5.** Hamburger analogs made from texturized soy were made with as shown in the table below. The sample containing DDGS was judged by an expert panel to have better flavor and appearance than control

| **Ingredient** | **Control** | **Experimental** |
|---|---|---|
| DDGS (Upper Class) | 0 | 3.77 |
| Textured soy protein concentrate | 20.29 | 19.1 |
| Water | 68.16 | 66.26 |
| Flavors | 8.14 | 7.66 |
| thickener/binder | 3.41 | 3.21 |
| | | |
| total | 100 | 100 |

## Claims

1. A method of manufacturing a food for human consumption comprising:
fermenting and distilling a grain to provide distillers dried grain and solubles (DDGS);
selecting from among the DDGS those particles with a relatively light color to form a High Quality DDGS; and
using the High Quality DDGS in the formation of a food product;
wherein the food product is less than about 10% High Quality DDGS by weight.

2. The method of claim 1 wherein the process of selecting is accomplished using spectrophotometry, and wherein the High Quality DDGS consists essentially of particles with an "L" value of at least 60 and a "b" value of at least +40 as measured on the Hunter Instruments L*a*b color scale, in accordance with ASTM standard methods D6290, E1347 and E308.

3. The method of claim 1 wherein the process of selecting further comprises air elutriation.

4. A method of making a reduced sodium food composition for human consumption comprising:
preparing a food composition having reduced level of sodium chtoride wherein DDGS is included at levels of less than about 10% of the total food composition to provide a salty flavor.

5. The method of claim 4 wherein the grain residue accounts for less than 5% of the food composition by weight.

6. The method of claim 4 wherein the grain residue is dried DGS, wet DGS, or a DGS extract.

7. The method of claim 6 wherein the grain residue is dried DGS.

8. The method of claim 7 wherein the grain residue consists essentially of particles with an "L" value of at least 60 and a "b" value of at least +40 as measured on the Hunter Instruments L*a*b color scale.

9. The method of claim 8 wherein the dried grain residue accounts for less than 5% of the reduced sodium food by weight composition.

10. A method of flavoring a food composition comprising adding DGS to the food product in an amount effective for increasing the savory and umami flavors of the food composition;
wherein the DGS is about 0.1 wt. % to about 10 wt. % of the entire food product.

11. The method of claim 10 wherein the DGS is dried DGS, wet DGS, or a DGS extract.

12. The method of claim 11 wherein the DGS is dried DGS.
